# EUROPÄISCHE PATENTSCHRIFT

(11) **EP 1 563 203 B1**
(45) Veröffentlichungstag und Bekanntmachung des Hinweises auf die Patenterteilung: **30.04.2014**
(21) Anmeldenummer: 03776834.8
(22) Anmeldetag: 08.11.2003
(51) Int. Cl.: F16F 15/131, F16D 3/04, F16D 3/72

(54) **VORRICHTUNG ZUR KOPPLUNG ZWEIER WELLEN**
DEVICE FOR COUPLING TWO SHAFTS
DISPOSITIF POUR ACCOUPLER DEUX ARBRES

(30) Priorität: 14.11.2002 DE 10252965
(43) Veröffentlichungstag der Anmeldung: 17.08.2005
(73) Patentinhaber: Schaeffler Technologies GmbH & Co. KG, 91074 Herzogenaurach (DE)
(72) Erfinder: SCHWEDERLE, Philippe, 67000 Strasbourg (FR); JÄCKEL, Johann, 77830 Bühlertal (DE); IWANOV, Ivelin, 77694 Kehl (DE)
(86) Internationale Anmeldenummer: PCT/DE2003/003701
(87) Internationale Veröffentlichungsnummer: WO 2004/044451

(56) Entgegenhaltungen:
- EP-A- 1 331 126
- WO-A-00/57073
- CH-A- 424 392
- FR-A- 2 276 623
- US-A- 4 040 270
- US-A- 4 208 889
- US-A- 4 331 003

## Beschreibung

Die Erfindung betrifft eine Vorrichtung zur Kopplung zweier mit Abstand achs-parallel oder in einem Winkel zueinander angeordneten Wellen mit mindestens einem Kopplungselement.

Vorrichtungen der gattungsgemäßen Art sind zum Beispiel durch die WO 00/57073 A, US-A-4040270 und CH 424 392 A bekannt. Bevorzugt werden solche Vorrichtungen für Motoren mit variabler Kompression und/oder variablem Hubraum verwendet. Die Verstellung der Kompression kann bei solchen Motoren durch eine exzentrische Lagerung der Kurbelwelle erfolgen, so dass sich ein Versatz zwischen der Kurbelwelle und der eigentlichen Abtriebswelle des Motors ergibt. Nachteilig ist, dass die bekannten Systeme, beziehungsweise die zum Überbrücken des Achsversatzes verwendeten Kopplungselemente, relativ viel Bauraum benötigen, hohe Energieverluste durch Reibung mit sich bringen und auch keine Möglichkeit zur Dämpfung von Torsionsschwingungen aufweisen.

Aufgabe der Erfindung ist es daher, eine Vorrichtung der gattungsgemäßen Art bereitzustellen, die ein Gesamtoptimum hinsichtlich der Kriterien Wirkungsgrad, kompakte Bauweise und Dämpfung von Torsionsschwingungen ermöglicht.

Diese Aufgabe wird mit einer Vorrichtung gemäß den Merkmalen des Anspruchs 1 gelöst. Diese zeichnet sich dadurch aus, dass zumindest eine erste rotierende Masse und eine zweite rotierende Masse vorgesehen sind, die zur Dämpfung von Torsionsschwingungen über wenigstens einen Schwingungsdämpfer drehgekoppelt sind, wobei eine der ersten rotierenden Masse zugeordnete Kurbelwelle und eine der zweiten rotierenden Masse zugeordnete Abtriebswelle einen Achsversatz aufweisen, wobei der Schwingungsdämpfer als Druckfedern ausgebildete, elastische Elemente aufweist, die zwischen mit den zueinander verdrehbaren Massen drehverbundenen Anschlägen einspannbar sind, wobei Elemente, die einen Ausgleich des Achsversatzes ermöglichen, mit den elastischen Elementen in Reihe wirksam sind. Dies ermöglicht eine sehr kompakte Bauweise der Vorrichtung, die gleichzeitig zur Dämpfung von Torsionsschwingungen geeignet ist. Aufgrund der kompakten Bauweise kann auf weitere Dämpfungselemente und Lagerungen verzichtet werden, so dass durch diese verursachte Energieverluste vermieden werden können, was den Gesamtwirkungsgrad der Vorrichtung deutlich verbessert.

Bevorzugt wird ein Ausführungsbeispiel, das sich dadurch auszeichnet, dass eine der ersten rotierenden Masse zugeordnete Kurbelwelle und eine der zweiten rotierenden Masse zugeordnete Abtriebswelle, insbesondere Getriebeeingangswelle, einen Achsversatz aufweisen. Eine so gestaltete Vorrichtung kann als Kopplungseinheit für einen Verbrennungsmotor mit variabler Kompression eingesetzt werden.

Die der Erfindung zu Grunde liegende Aufgabe wird außerdem durch eine Vorrichtung nach Anspruch 2, insbesondere für eine Vorrichtung nach Anspruch 1 zur Kopplung zweier mit Abstand achsparallel zueinander angeordneten Wellen gelöst. Dieses zeichnet sich dadurch aus, dass zum Ausgleich des Versatzes mindestens ein elastisches Element vorgesehen ist. Das elastische Element dient dabei zur Übertragung des Drehmoments und zur Dämpfung von Torsionsschwingungen. Während des Betriebs der Vorrichtung nimmt das mindestens eine elastische Element zyklisch Energie auf und gibt diese wieder ab. Somit sind auch die beim Überbrücken des Versatzes auftretenden Verluste besonders gering, was einen guten Wirkungsgrad des Kopplungselements zur Folge hat.

Bevorzugt wird ein Ausführungsbeispiel der Vorrichtung, das sich dadurch auszeichnet, dass das mindestens eine elastische Element als Spiralfeder, insbesondere als Druckfeder, ausgebildet ist. Spiralfedern können bei verhältnismäßig geringem Raumbedarf und gutem Wirkungsgrad verhältnismäßig große Energiemengen aufnehmen und wieder abgeben.

Besonders bevorzugt wird ein Ausführungsbeispiel der Vorrichtung, das sich dadurch auszeichnet, dass das mindestens eine elastische Element vorgespannt ist. Dies ist vorteilhaft, weil durch die Vorspannung größere Drehmomente über die gekoppelten Wellen übertragen werden können.

Außerdem wird ein Ausführungsbeispiel der Vorrichtung bevorzugt, das durch vier parallel zueinander angeordnete, über das mindestens eine elastische Element gekoppelte Scheiben gekennzeichnet ist. Jeweils zwei der vier Scheiben sind fest miteinander verbunden. Zwischen den jeweils zwei fest miteinander verbundenen Scheiben kann also über das mindestens eine elastische Element ein Drehmoment übertragen werden.

Weiter wird ein Ausführungsbeispiel der Vorrichtung bevorzugt, das sich dadurch auszeichnet, dass die Scheiben jeweils mindestens einen Durchbruch aufweisen, der bevorzugt länglich ausgebildet ist und in Umfangsrichtung der Scheiben gekrümmt verläuft. Das mindestens eine elastische Element kann zum Koppeln der Scheiben in den jeweils mindestens einen Durchbruch eingebracht werden, wodurch sich der Bedarf an Bauraum minimieren lässt.

Ein weiteres bevorzugtes Ausführungsbeispiel der Vorrichtung zeichnet sich dadurch aus, dass dem mindestens einen Durchbruch zwei elastische Elemente zugeordnet sind. Dies ermöglicht es, die elastischen Elemente in Reihe zu schalten.

Ein besonders bevorzugtes Ausführungsbeispiel der Vorrichtung zeichnet sich dadurch aus, dass zwei innere Scheiben und zwei äußere Scheiben, die jeweils fest miteinander verbunden sind, vorgesehen sind. Über das mindestens eine elastische Element kann so ein Drehmoment von den zwei inneren Scheiben auf die zwei äußeren Scheiben, oder umgekehrt, übertragen werden.

Ein überdies bevorzugtes Ausführungsbeispiel der Vorrichtung zeichnet sich dadurch aus, dass die jeweils miteinander verbundenen Scheiben im Wesentlichen symmetrisch zu einer gedachten Mittelebene aufgebaut und angeordnet sind. Die jeweils miteinander verbundenen Scheiben können über das mindestens eine elastische Element gekoppelt werden. Aufgrund der Symmetrie ergibt sich ein vorteilhafter Kraftfluss, so dass die Lagerbelastung möglichst gering ist.

Ein weiteres bevorzugtes Ausführungsbeispiel der Vorrichtung zeichnet sich dadurch aus, dass der mindestens eine Durchbruch der zwei inneren Scheiben verdreht gegen den mindestens einen Durchbruch der zwei äußeren Scheiben angeordnet ist. Die Durchbrüche überdecken sich also nur teilweise. In die teilweise Überdeckung kann das mindestens eine elastische Element eingebracht werden.

Außerdem wird ein Ausführungsbeispiel der Vorrichtung bevorzugt, das sich dadurch auszeichnet, dass das mindestens eine elastische Element mit einem durch die inneren Scheiben gebildeten Lager, insbesondere einem Federkanal und einem Federanschlag, und einem durch die äußeren Scheiben gebildeten Lager, insbesondere einem Federkanal und einem Federanschlag, zusammenwirkt. Die inneren und die äußeren Scheiben sind also über das mindestens eine elastische Element und die Lager miteinander gekoppelt.

Ein weiteres bevorzugtes Ausführungsbeispiel der Vorrichtung zeichnet sich dadurch aus, dass die inneren Scheiben mit den äußeren Scheiben elastisch so miteinander gekoppelt sind, dass diese gegeneinander axial versetzbar sind, und dass im versetzten, achsparallelen oder koaxialen Zustand von den inneren auf die äußeren Scheiben -oder umgekehrt- ein Drehmoment übertragbar ist. Vorteilhaft ist, dass im koaxialen Zustand oder bei einem bis zu einer gewissen Obergrenze beliebig großen axialen Versatz Drehmomente über das Kopplungselement übertragbar sind.

Ferner wird ein Ausführungsbeispiel der Vorrichtung bevorzugt, dass sich dadurch auszeichnet, dass die inneren Scheiben und die äußeren Scheiben jeweils einen Bereich, insbesondere einen Steg und/oder Flansch, zur Übertragung eines Drehmoments auf ein anderes Bauteil aufweisen. So können zwei zu koppelnde Wellen über die Bereiche an das Kopplungselement angeschlossen werden.

Außerdem wird ein Ausführungsbeispiel der Vorrichtung bevorzugt, das sich dadurch auszeichnet, dass die Elemente zum Ausgleich des Achsversatzes mindestens einen einstellbaren Exzenter umfassen.

Ein weiteres bevorzugtes Ausführungsbeispiel des Kopplungselements zeichnet sich dadurch aus, dass die zwei rotierenden Massen über das mindestens eine elastische Element und die vier Scheiben miteinander gekoppelt sind. Die zwei rotierenden Massen können also trotz eines axialen Versatzes miteinander gekoppelt werden. Über das mindestens eine elastische Element kann eine Dämpfung von Torsionsschwingungen zwischen den rotierenden Massen erfolgen.

Die der Erfindung zu Grunde liegende Aufgabe wird außerdem durch ein Kopplungselement nach Anspruch 16, insbesondere für eine Vorrichtung nach einem der Ansprüche 1 oder 2, zur Kopplung zweier mit Abstand achsparallel oder mit einem Winkel zueinander angeordneten Wellen, mit zumindest einem Kardangelenk gelöst. Dieses zeichnet sich dadurch aus, dass das Kardangelenk zumindest ein Kugelgelenk mit einem Kugelkopf und einer Kugelpfanne aufweist. Über das Kardangelenk mit dem Kugelgelenk ist es möglich, die zwei Wellen in einem Winkel zueinander anzuordnen und gleichzeitig besonders exakt zu koppeln.

Bevorzugt wird ein Ausführungsbeispiel des Kopplungselements, das sich dadurch auszeichnet, dass der Kugelkopf an mindestens eine erste Kugelabschnittsfläche und die wenigstens eine Kugelpfanne eine daran angepasste Gegenfläche aufweist. Über die mindestens eine Kugelabschnittsfläche und die angepasste Gegenfläche ist es möglich, ein Drehmoment, insbesondere große Drehmomente, über das Kardangelenk zu übertragen.

Ein weiteres bevorzugtes Ausführungsbeispiel des Kopplungselements zeichnet sich dadurch aus, dass zwei Kardangelenke vorgesehen sind. Somit ist es möglich, die zwei Wellen wahlweise beabstandet achsparallel, koaxial oder in einem Winkel zueinander angeordnet zu koppeln.

Außerdem wird ein Ausführungsbeispiel des Kopplungselements bevorzugt, das sich durch eine Kugelschale mit einer inneren Kugelpfanne und einem äußeren Kugelkopf auszeichnet. Die Kugelschale stellt also quasi zwei ineinander liegende Kugelgelenke dar. Diese Kugelgelenke können jeweils eine Kugelabschnittsfläche sowie eine daran angepasste Gegenfläche aufweisen. Die Flächen reduzieren die Freiheitsgrade der ineinander gelegenen Kugelgelenke jeweils zu einem Schwenklager. Die Schwenkachsen können so gewählt werden, dass sich ein Kardangelenk ergibt.

Ein weiteres bevorzugtes Ausführungsbeispiel des Kopplungselements zeichnet sich dadurch aus, dass das Kardangelenk einen Fixierstift zum Fixieren der Kugelschale aufweist. Die Kugelschale wird durch den Fixierstift zusätzlich geführt, was die Qualität der Lagerung verbessert.

Ein weiteres bevorzugtes Ausführungsbeispiel zeichnet sich dadurch aus, dass das Kardangelenk mit dem Schwingungsdämpfungselement gekoppelt ist. Das Schwingungsdämpfungselement kann so ausgestaltet sein, dass dieses beim Übertragen von Drehmomenten und auch während einer Umdrehung Energie aufnimmt und wieder abgibt, also eine Dämpfungsfunktion übernimmt.

Außerdem bevorzugt wird ein Ausführungsbeispiel des Kopplungselements, das sich dadurch auszeichnet, dass die rotierenden Massen über das Kardangelenk und das Kopplungselement miteinander gekoppelt sind. Die rotierenden Massen können so auf die auftretenden Drehmomentschwankungen ausgelegt sein, dass sich eine besonders gute Dämpfung ergibt.

Ferner wird ein Ausführungsbeispiel des Kopplungselements bevorzugt, das sich dadurch auszeichnet, dass das wenigstens eine Schwingungsdämpfungselement im koaxialen, lastfreien Zustand der zwei Wellen radial, unter Last in einem Winkel zu einer gedachten Durchmesserlinie und im abgewinkelten Zustand der zwei Wellen während einer Umdrehung derselben einen Winkelbereich zu einer gedachten Drehebene einer der zwei Wellen durchläuft. Das Schwingungsdämpfungselement kann dabei Energie abgeben und aufnehmen, was eine Dämpfung der zwei gekoppelten Wellen zur Folge hat.

Schließlich wird ein Ausführungsbeispiel des Kopplungselements bevorzugt, das sich dadurch auszeichnet, dass die zwei rotierenden Massen über das Kardangelenk miteinander gekoppelt sind. Die zwei rotierenden Massen können also axial versetzt oder in einem Winkel zueinander angeordnet und über das Kardangelenk miteinander gekoppelt werden. Dabei ist es auch möglich, zwischen den zwei rotierenden Massen auftretende Torsionsschwingungen über das Schwingungsdämpfungselement zu dämpfen.

Die der Erfindung zu Grunde liegende Aufgabe wird außerdem durch ein Kopplungselement nach Anspruch 25, insbesondere für die Vorrichtung nach einem der Ansprüche 1 oder 2, zur Kopplung zweier mit Abstand achsparallel zueinander angeordneten Wellen gelöst. Bei dem Kopplungselement ist vorgesehen, dass dieses zum Ausgleich des Versatzes zumindest einen Exzenter aufweist, der zwei Scheiben und einer Kupplungsplatte zugeordnet ist. Über den Exzenter kann trotz eines axialen Versatzes ein Drehmoment zwischen den zwei Scheiben und der Kupplungsplatte übertragen werden.

Bevorzugt wird ein Ausführungsbeispiel des Kopplungselements, das sich dadurch auszeichnet, dass die Kupplungsplatte, insbesondere über einen Flansch, der zweiten rotierenden Masse zugeordnet ist. Die Kupplungsplatte kann so rotatorisch fest mit der zweiten rotierenden Masse verbunden werden, dass sich eine einheitliche rotierende Masse ergibt. Somit ist die Kupplungsplatte Teil der zweiten rotierenden Masse. Mithin ergibt sich durch die Kupplungsplatte keine Gewichtserhöhung der Gesamtanordnung.

Außerdem bevorzugt wird ein Ausführungsbeispiel des Kopplungselements, das sich dadurch auszeichnet, dass die zwei rotierenden Massen über die zwei Scheiben und die Kupplungsplatte miteinander gekoppelt sind. Dies ermöglicht es, von der einen rotierenden Masse ein Drehmoment auf die andere rotierende Masse zu übertragen.

Schließlich wird ein Ausführungsbeispiel des Kopplungselements bevorzugt, das sich dadurch auszeichnet, dass die zwei rotierenden Massen relativ zueinander verdrehbar sind, wobei das Schwingungsdämpfungselement so angebracht ist, dass es der relativen Verdrehung der zwei rotierenden Massen entgegenwirkt. So ist es möglich, dass beim Anlegen eines Drehmoments die zwei rotierenden Massen zwar relativ zueinander verdrehbar sind, dabei aber stets das Schwingungsdämpfungselement Energie aufnimmt, die es zumindest teilweise wieder abgeben kann. Auf diese Weise können zwischen den zwei rotierenden Massen auftretende Torsionsschwingungen gedämpft werden.

Die der Erfindung zu Grunde liegende Aufgabe wird außerdem durch eine Vor-richtung nach Anspruch 29 gelöst. Diese zeichnet sich durch ein Kopplungselement nach einem der Ansprüche 3 bis 15 und/oder 16 bis 24 und/oder 25 bis 28 aus. Unter Ausnützung der jeweiligen vorteilhaften Eigenschaften des eingesetzten Kopplungselements lässt sich eine solche Vorrichtung hinsichtlich der Kriterien Wirkungsgrad, komptakte Bauweise und Dämpfung von Torsionsschwingungen gesamtheitlich optimieren.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figuren 1 und 2: jeweils ein Einzelteil eines Kopplungselements;
- Figur 3: eine Draufsicht auf ein Kopplungselement;
- Figur 4: einen Längsschnitt durch eine Gesamtanordnung mit einer Vorrichtung zur Kopplung zweier Wellen;
- Figuren 5 bis 7: Detailansichten der in Figur 4 gezeigten Vorrichtung;
- Figur 8: einen Längsschnitt eines weiteren Kopplungselements;
- Figuren 9 und 10: weitere Längsschnitte von Vorrichtungen zur Kopplung zweier Wellen;
- Figuren 11 und 12: Detailansichten von Längsschnitten eines Kopplungselements mit Exzenter;
- Figur 13: einen Längsschnitt einer rotierenden Masse;
- Figur 14: einen Querschnitt des in den Figuren 11 und 12 gezeigten Kopplungselements;
- Figur 15: einen Exzenter;
- Figur 16: einen weiteren Längsschnitt einer Vorrichtung zur Kopplung zweier Wellen;
- Figur 17: einen Lochkreis eines Flansches für die in Figur 16 gezeigte Vorrichtung und
- Figur 18: einen Längsschnitt durch eine Gesamtanordnung mit der in Figur 16 gezeigten Vorrichtung.

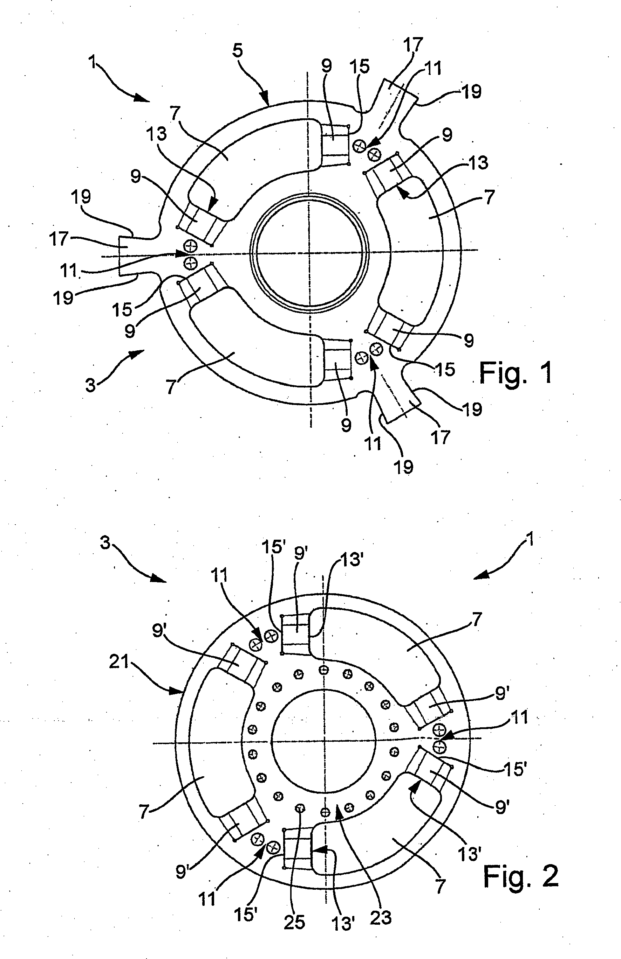

Figur 1 zeigt einen Teil einer Vorrichtung 1 zur Kopplung zweier Wellen mit einem Kopplungselement 3, von dem ebenfalls nur eine innere Scheibe 5 dargestellt ist.

Die innere Scheibe 5 weist drei in Umfangsrichtung 5 länglich verlaufende Durchbrüche 7 auf, die jeweils an ihren Enden zwei Rinnen 9 aufweisen. Die Rinnen 9 weiten sich in Richtung der Durchbrüche 7 leicht konisch auf.

Außerdem weist die innere Scheibe 5 Befestigungsstellen 11 auf, die hier als mit Schrauben zu versehende Bohrungen ausgeführt sind. Über die Befestigungsstellen 11 können zwei der inneren Scheiben 5 so zusammengefügt werden, dass sich deren Durchbrüche 7 mit den Rinnen 9 jeweils exakt gegenüber liegen. Sich gegenüber liegende Rinnen 9 bilden so einen Federkanal 13, in den ein elastisches Element, insbesondere eine als Druckfeder ausgebildete Spiralfeder, einbringbar ist. Am Ende der Federkanäle 13 ergibt sich jeweils ein Federanschlag 15, die zusammen eine Lagerung für das elastische Element, insbesondere die als Spiralfeder ausgebildete Druckfeder, bilden. Da die Rinnen 9 und somit auch die Federkanäle 13 der zwei inneren Scheiben 5 sich leicht konisch öffnen, ist es möglich, die Druckfeder darin so zu lagern, dass diese relativ zu ihrer Mittelachse entsprechend dem Öffnungswinkel der Federkanäle 13 beweglich ist.

Außerdem weist die innere Scheibe 5, zumindest einen, hier drei Stege 17 mit jeweils zwei Anschlägen 19 auf. Die Stege 17, insbesondere deren Anschläge 19 können mit anderen Elementen der Vorrichtung 1, insbesondere einem Schwingungsdämpfungselement, das hier nicht dargestellt ist, zum Übertragen eines Drehmoments von und auf die inneren Scheiben ausgenutzt werden.

Figur 2 zeigt eine äußere Scheibe 21, die ebenfalls Teil des Kopplungselements 3 ist. Gleich ausgebildete Details sind mit gleichen Bezugsziffern versehen, so dass diesbezüglich auf die Beschreibung zu Figur 1 verwiesen wird.

Zu erkennen ist ein Flansch 23 mit Bohrungen 25, über den die äußere Scheibe 21 zur Übertragung eines Drehmoments mit einer Welle koppelbar ist.

Die äußere Scheibe 21 weist ebenfalls Durchbrüche 7 auf, deren Enden im Unterschied Rinnen 9', die etwas flacher gestaltet sind, aufweisen. Auch die äußere Scheibe 21 kann über die Befestigungsstellen 11 mit einer weiteren, im Wesentlichen spiegelbildlich aufgebauten äußeren Scheibe so zusammengefügt werden, dass sich Federkanäle 13' mit Federanschlägen 15' ergeben. Zwei der äußeren Scheiben 21 werden dazu über die Befestigungsstellen 11 mit einem Abstand verbunden. Der Abstand der Scheiben 21 und die Tiefe der Rinnen 9' sind dabei so aufeinander abgestimmt, dass die hier nicht dargestellte Druckfeder gleichermaßen in dem Federkanal 13' der äußeren Scheiben 21 und/oder dem Federkanal 13 der inneren Scheiben 5 lagerbar ist.

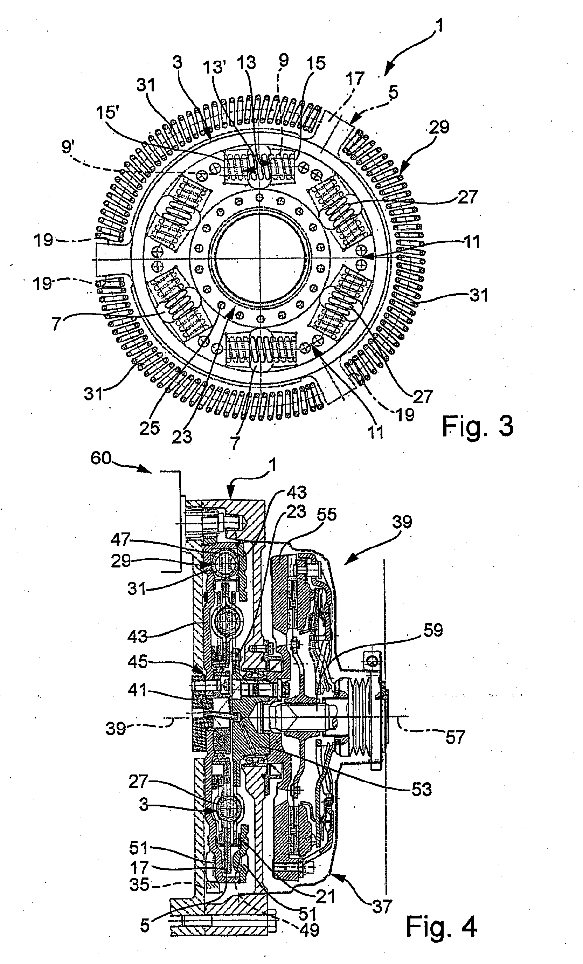

Figur 3 zeigt eine Draufsicht auf das Kopplungselement 3 mit zwei inneren Scheiben 5 und zwei äußeren Scheiben 21, die jeweils exakt übereinander liegen. Die inneren Scheiben 5 sind durch strichpunktierte und die äußeren Scheiben 21 mittels durchgezogener Linien angedeutet. Gleiche Teile sind mit gleichen Bezugsziffern versehen, so dass insofern auf die Beschreibung der vorhergehenden Figuren verwiesen wird.

Das Kopplungselement 3 weist einen sandwichartigen Aufbau aus insgesamt vier Scheiben 5, 21 auf. Die zwei innen angebrachten inneren Scheiben 5 sind fest miteinander verbunden und relativ gegen die ebenfalls fest miteinander verbundenen äußeren Scheiben 21 beweglich. Die für die Befestigungsstellen 11 verwendeten Fixierungsmittel der äußeren Scheiben 21 greifen durch die sich in Deckung befindlichen Durchbrüche 7 der inneren Scheiben 5 hindurch. So ist es möglich, dass die zwei äußeren Scheiben 21 und die zwei inneren Scheiben 5 jeweils fest miteinander verbunden und dennoch relativ gegeneinander beweglich sind.

Jedem Durchbruch 7 der Scheiben 5, 21 sind zwei elastische Elemente 27, die hier als auf Druck belastbare Spiralfedern ausgebildet sind, zugeordnet. Es ist zu erkennen, dass jedes der elastischen Elemente 27 beidseitig in den Federkanälen 13, 13' gelagert ist. Somit bewirkt jedes der elastischen Elemente 27 eine Druckkraft auf den jeweiligen Federanschlag 15 der inneren Scheiben 5 und den jeweiligen Federanschlag 15' der äußeren Scheiben 21. Da jedem der Durchbrüche 7 zwei elastische Elemente 27 zugeordnet sind, die jeweils gleich ausgebildet sind, ergibt sich eine Ruhestellung, die sich, bezogen auf die Länge der Durchbrüche 7 und der Federkanäle 13, 13', jeweils zu 50 % überdecken. Ein einzeln für sich betrachteter Durchbruch 7 der inneren Scheiben 5 oder der äußeren Scheiben 21 entspricht damit einem Federsystem aus zwei in Reihe geschalteten Druckfedern mit einem Mittelabgriff. Die Kräfte, die auf den Mittelabgriff wirken, werden dabei jeweils von den inneren Scheiben 5 auf die äußeren Scheiben 21 oder umgekehrt übertragen. Da es sich um eine ringförmige Anordnung handelt, sind quasi alle elastischen Elemente 27 mit sich selbst in Reihe geschaltet und übertragen alternierend ihre Federkräfte von der inneren Scheibe 5 auf die äußere Scheibe 21. Bei einer genannten Anzahl von elastischen, gleichen Elementen 27, sind diese im Gleichgewichtszustand alle exakt gleich vorgespannt, wobei sich die oben beschriebene 50 %ige Überdeckung ergibt.

Da die Durchbrüche 7 der Scheiben 5, 21 und die Federkanäle 13, 13' in Umfangsrichtung exakt gleich lang und radial gleich beabstandet sind, sind im Ruhezustand die Scheiben 5, 21 koaxial angeordnet und die Druckfedern jeweils exakt gleich ausgelenkt.

Die zwei inneren Scheiben 5 und die zwei äußeren Scheiben 21 können relativ gegeneinander verdreht werden. Aufgrund der konischen Ausgestaltung der Federkanäle 13, 13' ist es aber auch möglich, einen axialen Versatz der Scheiben herbeizuführen. Die Federkräfte der elastischen Elemente 27 wirken der relativen Verdrehung und auch dem axialen Versatz entgegen. Die elastischen Elemente 27 sind so auszulegen, dass diese im Gleichgewichtszustand eine gewisse Vorspannung und noch genügend Reserve aufweisen, so dass diese auch bei maximaler Verdrehung oder maximalem axialen Versatz der Scheiben 5, 21 noch an den Federanschlägen 15, 15' anschlagen.

Dem Kopplungselement 3 ist mindestens ein Schwingungsdämpfungselement 29 zugeordnet, das hier drei Bogenfedern 31 aufweist. Die Bogenfedern 31 schlagen jeweils an den Anschlägen 19 der Stege 17 der inneren Scheiben 5 an. Über die Stege 17 der inneren Scheiben 5, die elastischen Elemente 27 und den Flansch 23 der inneren Scheibe 5 kann ein Drehmoment übertragen werden. Vorteilhaft ist dabei, dass einerseits eine gewisse Dämpfung von Torsionsschwingungen möglich ist und die Drehmomentübertragung auch bei einem gewissen axialen Versatz erfolgen kann. Zur Übertragung größerer Drehmomente können sich drei der elastischen Elemente 27 bis auf Block spannen, während sich die drei übrigen elastischen Elemente 27 dementsprechend entspannen, jedoch noch an den Federanschlägen 15, 15', um bei einer Lastumkehr Anschlaggeräusche zu vermeiden, anliegen. Dies minimiert den Verschleiß, da so an den elastischen Elementen 27 keine Reibung auftritt.

Figur 4 zeigt einen Längsschnitt durch eine Gesamtanordnung 33 mit der Vorrichtung 1 und dem Kopplungselement 3 zur Kopplung zweier Wellen. Gleiche Teile sind mit gleichen Bezugsziffern versehen, so dass insofern auf die Beschreibung der vorhergehenden Figuren verwiesen wird.

Bei der Gesamtanordnung 33 handelt es sich um eine Abtriebseinheit für einen Verbrennungsmotor mit einem hier angedeuteten Motorblock 35 und einer selbstjustierenden Trockenkupplung 37. Das Prinzip von Trockenkupplungen ist bekannt, so dass hier nicht näher darauf eingegangen wird.

Zu erkennen ist eine erste Achse 39, die strichpunktiert dargestellt ist, einer Kurbelwelle 41. Die Kurbelwelle 41 ist einer ersten rotierenden Masse 43 zugeordnet. Die Zuordnung erfolgt hier mittels einer ersten Verbindung über einen Flansch 45.

Die erste Masse 43 ist hier mehrteilig ausgeführt und weist ein Lager 47 und Anschläge 49 für die Bogenfedern 31 auf. Die Anschläge 49 werden durch Eindellungen 51 der ansonsten tellerförmig gestalteten ersten Masse 43 gebildet. So ist es möglich, von der Kurbelwelle 41 über das Schwingungsdämpfungselement 29, insbesondere die Anschläge 49 und die Bogenfeder 31, ein Drehmoment auf das Kopplungselement 3 zu übertragen. Das Kopplungselement 3 ist über den Flansch 23 einem Zwischenstück 53 zugeordnet, das wiederum einer zweiten rotierenden Masse 55 zugeordnet ist. Es ist zu erkennen, dass die äußeren Scheiben 21, das Zwischenstück 53 und die zweite Masse 55 auf einer zweiten Achse 57 drehbar gelagert sind, die strichpunktiert angedeutet ist. Über die Kupplung 37 ist die zweite rotierende Masse 55 einer Abtriebswelle 59, insbesondere einer Getriebeeingangswelle, zugeordnet, deren Drehachse ebenfalls der zweiten Achse 57 entspricht.

Die Kurbelwelle 41 des Verbrennungsmotors und die Abtriebswelle 59, insbesondere die Getriebeeingangswelle, sind also versetzt zueinander angeordnet. Der Achsversatz beträgt bevorzugt 4 mm. Die Drehmomentübertragung, der Ausgleich des Achsversatzes und die Dämpfung von auftretenden Torsionsschwingungen erfolgt über das Schwingungsdämpfungselement 29 und das Kopplungselement 3. Die Auslegung der rotierenden Massen 43, 55 der Schwingungsdämpfungselemente 29 der Vorrichtung 1 und die elastischen Elemente des Kopplungselements 3 können so ausgelegt werden, dass sich bei den jeweiligen Typen von Verbrennungsmotoren besonders gute Übertragungseigenschaften, also Dämpfungseigenschaften ergeben.

Zum Antreiben der ersten Masse 43 zum Anlassen des Verbrennungsmotors kann ein Anlasser 60 vorgesehen sein, der hier nur teilweise dargestellt ist.

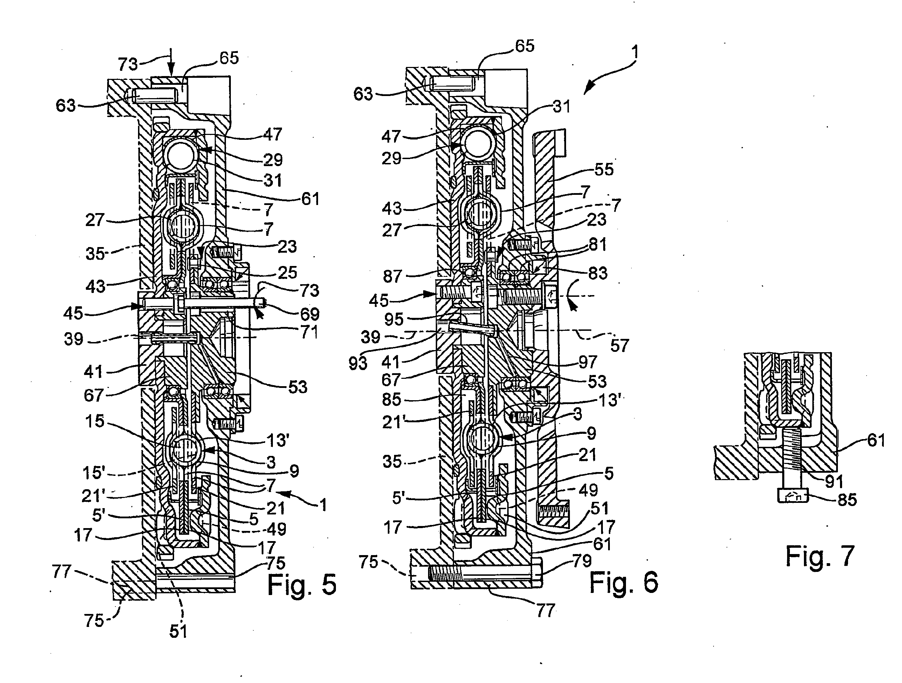

Figur 5 zeigt ebenfalls einen Längsschnitt durch einen Teil der Vorrichtung 1 vor der endgültigen Montage. Gleiche Teile sind mit gleichen Bezugsziffern versehen, so dass insofern auf die Beschreibung der vorangehenden Figuren verwiesen wird.

Figur 5 zeigt die Vorrichtung 1 ohne montierte zweite Masse 55, bevor der Versatz der Achsen 39, 57 eingestellt wurde.

Zur Montage der Vorrichtung 1 wird ein Gehäuse 61 mit dem Motorblock 35 zusammengefügt. Das Gehäuse wird dabei mittels eines Stiftes 63, der an dem Motorblock 35 fixiert ist, und einem Langloch 65 des Gehäuses 61 geführt.

Solange der Achsversatz noch nicht aufgetreten ist, kann die erste rotierende Masse 43 über ein weiteres Zwischenstück 67 mit einer Fixierhilfe 69 an die Kurbelwelle 41 angeschraubt werden. Die Fixierhilfe 69 kann dazu in eine Gewinde-bohrung 71 des Zwischenstücks 53 der zweiten rotierenden Masse 55 eingeführt werden. Sobald die Zuordnung der Kurbelwelle 41 zur ersten Masse 43 erfolgt ist, kann zum Herstellen des Achsversatzes der Achsen 57, 39 an dem Gehäuse 61 eine Kraft angelegt werden, die durch einen Pfeil 73 dargestellt ist. Das Gehäuse 61 kann entlang dem Stift 63 und dem Langloch 65 entlanggleiten, bis der Stift 63 auf der anderen Seite des Langloches 65 anschlägt. In diesem Zustand, der auch in Figur 6 dargestellt ist, kommt eine Bohrung 75 des Gehäuses 61 und eine Gewindebohrung 77 des Motorblocks 35 in Deckung. Das Gehäuse 61 kann also durch die Bohrungen 75, 77 mittels geeigneter Fixierungsmittel fixiert werden.

Figur 6 zeigt einen weiteren Längsschnitt der in Figur 5 dargestellten Vorrichtung 1, jedoch im fertig montierten Zustand mit der zweiten Masse 55 und dem Versatz der Achsen 39, 57. Gleiche Teile sind mit gleichen Bezugsziffern versehen, so dass insofern auf die Beschreibung der vorangehenden Figuren verwiesen wird.

Das Gehäuse 61 ist mittels einer Schraube 79, die in die Bohrungen 75, 77 eingeschraubt ist, so am Motorblock 35 fixiert, dass der Stift 63 am oberen Ende des Langlochs 65 des Gehäuses 61 anschlägt.

Die äußeren Scheiben 21, das Zwischenstück 53 und die zweite Masse 55, die fest miteinander verbunden sind, sind mittels Lager 81, 83 am Gehäuse 61 um die zweite Achse 57 drehbar gelagert. Zu erkennen ist auch, dass die äußeren Scheiben 21 unterschiedlich gestaltet sind. Die in Figur 2 dargestellte äußere Scheibe 21, die den Flansch 23 aufweist, der dem Zwischenstück 53 zugeordnet ist, ist mit einer weiteren inneren Scheibe 21' fest verbunden. Die innere Scheibe 21' weist anstelle des Flansches eine größere mittige Öffnung 85 auf, durch die hindurch die Lagerung der inneren Scheiben 5 erfolgen kann. Bei diesem Ausführungsbeispiel sind auch die inneren Scheiben 5 unterschiedlich ausgeführt, wobei eine innere Scheibe 5' radiale Lagerkräfte auf ein Lager 87 überträgt. Die Scheiben 5, 5' sind so miteinander fixiert, dass sie in Anlagekontakt stehen, und im Bereich des Lagers 87 so gebogen, dass sich ein Lagersitz für das Lager 87 ergibt, über den auch axiale Kräfte übertragen werden können. Der innere Lagersitz des Lagers 87 wird durch das an die Kurbelwelle 41 und die erste Masse 43 angeflanschte Zwischenstück 67 gebildet. Somit sind die Kurbelwelle 41, die erste Masse 43 und das Zwischenstück 67 drehbar gegen die inneren Scheiben 5, 5' gelagert.

Da die Bogenfeder 31 des Schwingungsdämpfungselements 29 in der Vorrichtung 1 mit den Stegen 17 der inneren Scheiben 5, 5' des Kopplungselements 3 und den durch die Eindellungen 51 gebildeten Anschlägen 49 der ersten Masse 43 zusammenwirkt, ist der Verdrehwinkel begrenzt. Beim relativen Verdrehen der ersten Masse 43 gegenüber dem Kopplungselement 3 kann das Schwingungsdämpfungselement 29 Energie aufnehmen beziehungsweise abgeben oder auch zumindest teilweise in Reibungsenergie umwandeln. Hierdurch wird das Prinzip eines Torsionsschwingungsdämpfers realisiert. Vorteilhaft ist bei dieser Anordnung, dass neben der Realisierung eines Torsionsschwingungsdämpfungssystems auch durch das Kopplungselement 3 ein axialer Versatz der Achsen 57, 39 sowie eine zusätzliche Dämpfung erfolgen kann.

Ein weiterer Vorteil ist, dass die zwei Massen 43, 55 durch den realisierten Torsionsschwingungsdämpfer voneinander entkoppelt sind. Außerdem ist zu erkennen, dass das Kopplungselement 3 zwischen den zwei Massen 43, 55 angeordnet, also vollständig in die Vorrichtung 1 integriert ist. Somit ist der durch die Vorrichtung 1 beanspruchte Bauraum nicht größer als bei einem herkömmlichen sogenannten Zwei-Massenschwungrad, das ebenfalls eine erste Masse 43 und eine zweite Masse 55 und beispielsweise eine Bogenfeder 31 aufweist.

Figur 7 zeigt einen abgewandelten Ausschnitt der in den Figuren 5 und 6 dargestellten Vorrichtung 1. Gleiche Teile sind mit gleichen Bezugsziffern versehen, so dass insofern auf die Beschreibung der vorhergehenden Figuren verwiesen wird.

Der in Figur 7 dargestellte Ausschnitt lässt erkennen, dass die in Figur 5 durch den Pfeil 73 angedeutete Kraft, die zur Herstellung des Versatzes der Achsen 39, 57 während der Montage des Gehäuses 61 der Vorrichtung 1 notwendig ist, durch eine Schraube 89 aufgebracht werden kann. Hierzu wird die Schraube in eine Gewindebohrung 91 des Gehäuses 61 eingedreht, solange bis diese an der ersten Masse 43 anschlägt. Da das Gehäuse 61 über die Lager 81 der zweiten Achse 57 und die erste Masse 43 über das Lager 87 der zweiten Achse 57 zugeordnet sind, kann so der Versatz der Achsen 39, 57 entgegen den Kräften der elastischen Elemente 27 des Kopplungselements 3 hergestellt werden. Sobald der Versatz der Achsen 39, 57 hergestellt ist, wird das Gehäuse 61, wie in Figur 6 beschrieben, mittels geeigneten Fixiermitteln an dem Motorblock 35 fixiert. Sobald die Verbindung zwischen dem Motorblock 35 und dem Gehäuse 61 der Vorrichtung 1 hergestellt ist, muss die Schraube 89 wieder entfernt oder zumindest soweit herausgedreht werden, dass diese die Drehbewegung der ersten Masse 43 nicht behindert. Wenn die Schraube 89 wieder entfernt wird, muss die Bohrung 91 wieder verschlossen werden, da die Vorrichtung eine Ölschmierung aufweist.

Im Folgenden wird kurz auf die Ölschmierung der Vorrichtung eingegangen. Das Öl wird über eine zentrische Bohrung 93 der Kurbelwelle 41 über ein Ölführungselement 95 und einen Ölkanal 97 des Zwischenstücks 53 ins Innere des Gehäuses 61 geleitet. Durch die Fliehkräfte wird das Öl innerhalb des Gehäuses 1 verteilt, um dann durch eine hier nicht dargestellte Öffnung wieder abgeführt zu werden.

Aufgrund des Kopplungselements 3 ist es möglich, die Kurbelwelle 41 des Verbrennungsmotors in ihrer Lage beliebig zu verändern. Der Ausgleich des dadurch entstehenden Versatzes zwischen der ersten Achse 39 der Kurbelwelle 41 und der zweiten Achse 57 der Abtriebsachse 59 kann durch das Kopplungselement 3 erfolgen. Besonders vorteilhaft ist es, wenn die Kurbelwelle 41 mittels eines Exzenters auf einer Kreisbahn um die zweite Achse verschwenkt wird. Dadurch ist es möglich, dass der Versatz der Achsen 39, 57 trotz einer Bewegung der Kurbelwelle 41, die eine Verstellung der Kompression des Verbrennungsmotors bewirkt, konstant bleibt.

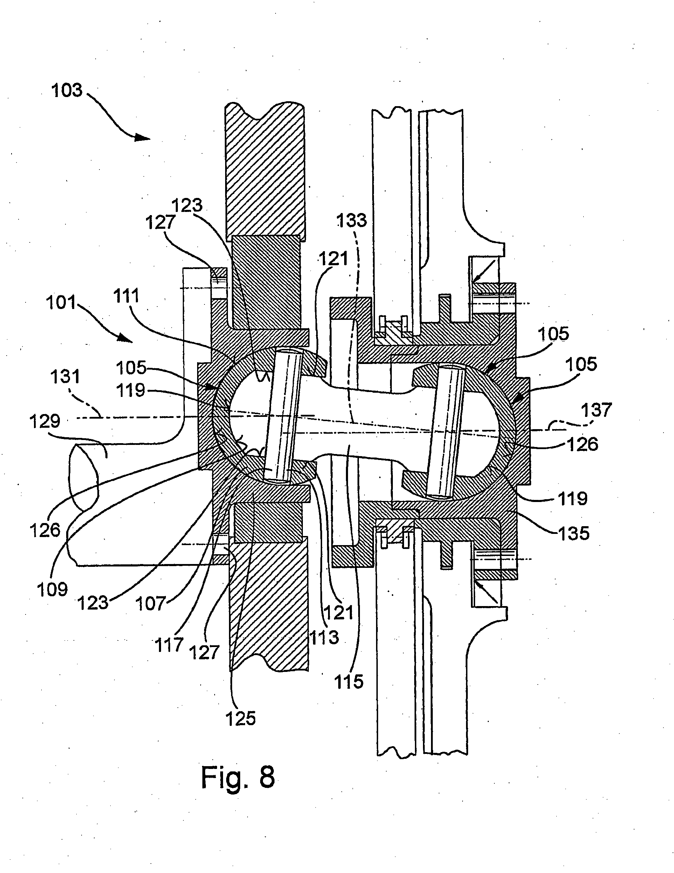

Figur 8 zeigt ein weiteres Kopplungselement 101, das insbesondere Teil einer Vorrichtung 103 zur Kopplung zweier Wellen ist.

Das Kopplungselement 101 weist zwei spiegelbildlich zueinander angeordnete und aufgebaute Kugelgelenkanordnungen 105 auf. Sich spiegelbildlich gegenüber liegende Teile werden in der Einzahl beschrieben.

Die Kugelgelenkanordnung 105 weist eine Kugelschale 107 mit einer inneren Kugelpfanne 109 und einem äußeren Kugelkopf 111 auf.

Die Kugelschale 107 ist mit Hilfe eines Fixierstifts 113 an einer Zwischenwelle 115 fixiert. Die Kugelschale 107 und die Zwischenwelle 115 weisen eine gemeinsame Bohrung 117 auf, in die der Fixierstift 113 eingebracht ist. Die Zwischenwelle 115 weist an ihren beiden Enden jeweils einen inneren Kugelkopf 119 auf, der Teil der Kugelgelenksanordnung 105 ist. Die Kugelköpfe 111 und 119 weisen jeweils zumindest eine Kugelabschnittsfläche auf, von denen eine erste Kugelabschnittsfläche 121 des inneren Kugelkopfs 119, die in Figur 8 senkrecht zur Bildebene steht, sichtbar ist. Die Kugelabschnittsfläche des äußeren Kugelkopfs 111 liegt parallel zur Bildebene und ist daher in der Darstellung gemäß Figur 8 nicht sichtbar. Jede der Kugelabschnittsflächen wirkt mit einer an diese angepassten Gegenfläche der entsprechenden Kugelpfanne zusammen. Die erste Kugelabschnittsfläche 121 wirkt also mit einer Gegenfläche 123 der inneren Kugelpfanne 109 zusammen.

In dem hier dargestellten Ausführungsbeispiel sind zwei Kugelabschnittsflächen 121 vorgesehen, die mit zwei entsprechenden Gegenflächen 123 zusammenwirken.

Die jeweils zumindest eine Kugelabschnittsfläche der Kugelköpfe 111, 119 mit den entsprechenden Gegenflächen bewirken, dass sich die Zwischenwelle nicht frei um ihre eigene Achse drehen kann. Vielmehr werden durch die Kugelgelenksanordnung 5 zwei Schwenklager mit um 90° versetzten Schwenkachsen realisiert, so dass ein Kardangelenk gebildet wird. Der äußere Kugelkopf 111 wirkt mit einem Zwischenstück 125 zusammen, das über geeignete Fixierstellen 127 einer Kurbelwelle 129 zugeordnet ist. Das Zwischenstück 125 weist eine äußere Kugelpfanne 126 mit einer Gegenfläche auf, die parallel zur Bildebene liegt, daher in Figur 8 nicht sichtbar ist und mit der zumindest einen Kugelabschnittsfläche des äußeren Kugelkopfs 111 zusammenwirkt.

Die Kurbelwelle 129 ist um eine erste Achse 131 drehbar gelagert, die hier strichpunktiert angedeutet ist. Aufgrund der durch die Kugelgelenksanordnung 5 realisierten Kardanmechanik bewirkt eine Drehung der Kurbelwelle 129 um die erste Achse 131, eine Drehung der Zwischenwelle 115 um eine Zwischenachse 133, die ebenfalls strichpunktiert angedeutet ist. Die zweite Kugelgelenksanordnung 105 der hier symmetrisch aufgebauten Zwischenwelle 115 wirkt mit einem weiteren Zwischenstück 135 zusammen, das einer Abtriebswelle, die hier nicht dargestellt ist, mit einer zweiten Achse 137, die strichpunktiert dargestellt ist, zuordenbar ist. Es werden durch die Kugelgelenksanordnungen 5 der Zwischenwelle 15 also zwei Kardangelenke realisiert, so dass trotz des Achsversatzes zwischen der Kurbelwelle 129 und der nicht dargestellten Abtriebswelle, also den Achsen 31, 37 eine Drehbewegung, insbesondere ein Drehmoment bis 1000 Nm, übertragen werden kann. Selbstverständlich ist es auch möglich, die hier nicht dargestellte Abtriebswelle selbst mit einer Kugelgelenksanordnung 5 zu versehen, so dass ein abgewinkelter Abtrieb realisiert wird. Bei einem bevorzugten Ausführungsbeispiel beträgt der Winkel, den die Zwischenachse 133 zu den Achsen 31, 37 einnimmt, 6°.

Bei einem hier nicht dargestellten Ausführungsbeispiel sind die Zwischenstücke 125 zwei rotierenden Massen und einem Schwingungsdämpfungselement zugeordnet.

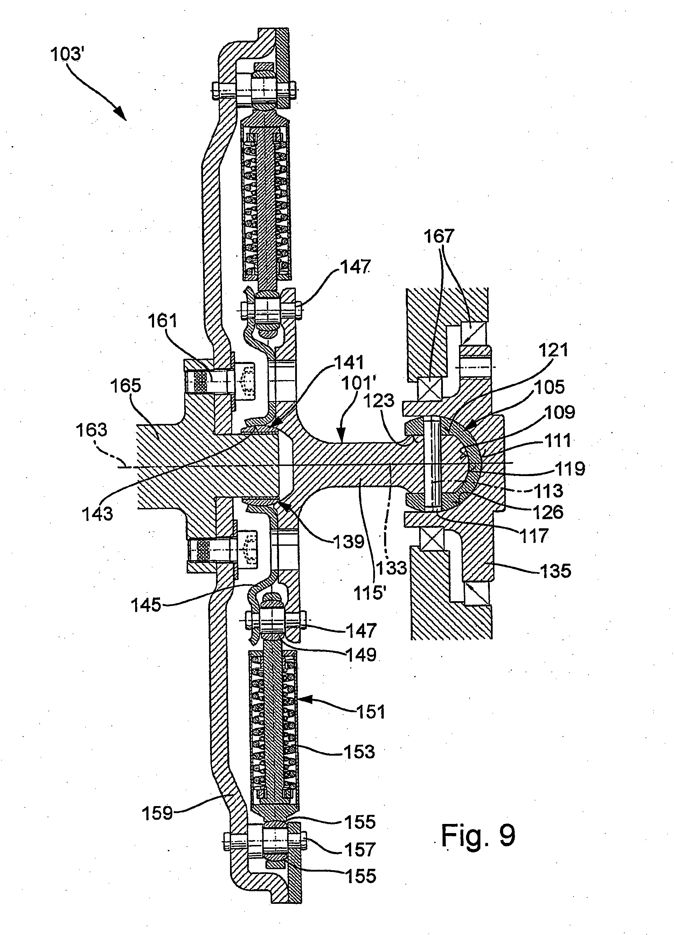

Figur 9 zeigt einen Längsschnitt einer weiteren Vorrichtung 103' zur Kopplung zweier Wellen mit einem Kopplungselement 101'. Gleiche Teile sind mit gleichen Bezugsziffern versehen, so dass insofern auf die Beschreibung der Figur 8 verwiesen wird. Zu erkennen ist eine Zwischenwelle 115' mit der Kugelgelenksanordnung 105 und einem Kugelgelenk 139 mit einem Kugelkopf 141 und einer Kugelpfanne 143. Der Kugelkopf 141 und die Kugelpfanne 143 des Kugelgelenks 139 sind hier lediglich als Kugelzonen, also als zweiseitig, parallel angeschnittene Kugelflächen ausgebildet. Das Kugelgelenk 139 ermöglicht so eine Taumelbewegung der zugeordneten Zwischenwelle 115' und eine Drehung derselben um die Zwischenachse 133. Die Kugelpfanne 143 ist einer Taumelscheibe 145 zugeordnet. Die Taumelscheibe 145 ist mittels geeigneter Fixiermittel 147 an der Zwischenwelle 115' fixiert. Über die Fixiermittel 147 ist außerdem ein Kalottenlager 149 an der Taumelscheibe 145 und der Zwischenwelle 115' fixiert. Über das Kalottenlager 149 ist ein Schwingungsdämpfungselement 151, das hier als lineares Federdämpferelement 151 ausgebildet ist, angebunden. Federdämpfersysteme, insbesondere mit Spiralfedern, sind bekannt, so dass hier nicht weiter darauf eingegangen wird.

Das Schwingungsdämpfungselement ist zwischen das Kalottenlager 149 und ein weiteres Kalottenlager 155 geschaltet. Dieses Kalottenlager 155 ist mittels geeigneter Fixierungsmittel 157 an eine erste rotierende Masse 159 angebunden. Die erste rotierende Masse 159 kann über einen Flansch 161 an eine Welle mit einer ersten Achse 163, die hier strichpunktiert dargestellt ist, angebunden werden. Bei der Welle handelt es sich insbesondere um eine Kurbelwelle 165 eines Verbrennungsmotors.

Die Taumelscheibe 145 und somit auch die Zwischenwelle 115' kann relativ zu der ersten Masse 159 eine Dreh- und/oder Taumelbewegung durchführen. Der in Figur 9 dargestellte Zustand entspricht dem Ruhezustand. Im Ruhezustand sind die Schwingungsdämpfungselemente 151 radial zur ersten Achse 162 der Kurbelwelle 165 angeordnet. Eine Taumelbewegung bewirkt eine Auslenkung der Schwingungsdämpfungselemente 151 gegenüber der Drehebene der Kurbelwelle 65. Eine relative Verdrehung der Kurbelwelle gegen die Zwischenwelle 115' bewirkt eine Auslenkung der Schwingungsdämpfungselemente gegenüber einer gedachten Durchmesserlinie. Die Schwingungsdämpfungselemente wirken der Verdrehung entgegen und begrenzen den maximal möglichen Verdrehwinkel.

Eine Taumelbewegung oder eine relative Verdrehung bewirkt eine Verlängerung beziehungsweise Verkürzung des Schwingungsdämpfungselements 151, so dass dieses dabei Energie aufnehmen beziehungsweise abgeben kann. Mithin ist eine abgewinkelte Übertragung einer Drehbewegung von der ersten Achse 163 auf die Zwischenachse 133 der Zwischenwelle 115' möglich. Überdies lässt sich über die Vorrichtung 103' ein Drehmoment, insbesondere bis zu 500 Nm, unter Dämpfung von Torsionsschwingungen übertragen. Im Vergleich zu einer starren Verbindung kann das Kopplungselement 103' schwächer angelegt werden. Von der Zwischenwelle 115' kann diese Drehbewegung und das Drehmoment weiter auf das Zwischenstück 135, das der Kugelgelenksanordnung 105 zugeordnet ist, übertragen werden. Das Zwischenstück 135 ist insbesondere einer Abtriebswelle, die hier nicht dargestellt ist, und/oder einer zweiten rotierenden Masse, die hier ebenfalls nicht dargestellt ist, zugeordnet. Das Zwischenstück 135 ist mittels geeigneter Lager 167 drehbar gelagert, wobei dessen Drehachse einen in gewissen Grenzen beliebigen Winkel und/oder axialen Versatz zur ersten Achse 163 einnehmen kann. Bevorzugt wird ein axialer Versatz von 4 mm und ein Winkelversatz der Zwischenachse 133 zur ersten Achse 163 von 6°.

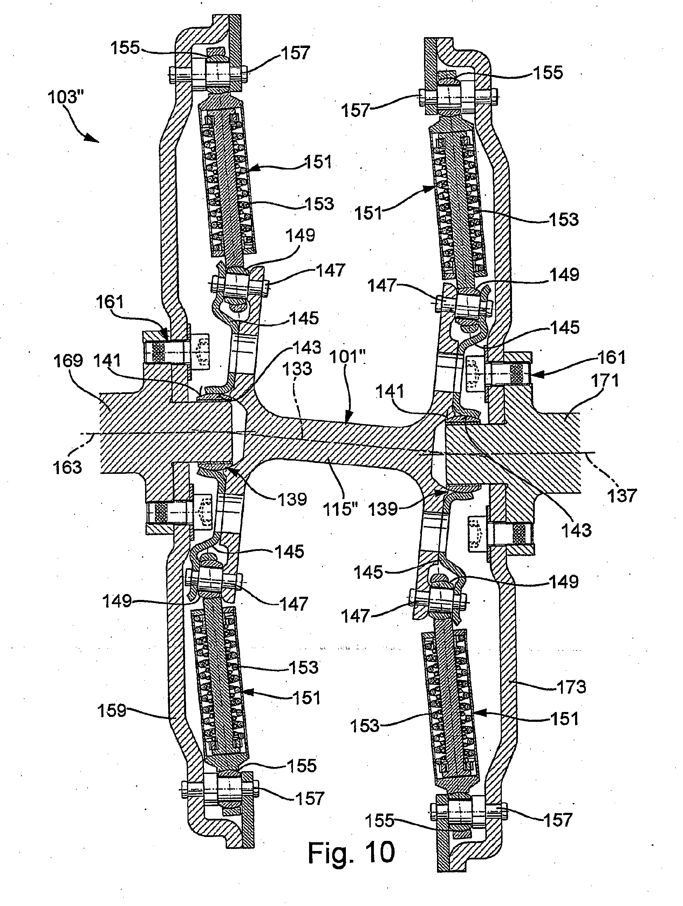

Figur 10 zeigt eine weitere vorteilhafte Vorrichtung 103" mit einem Kopplungselement 101". Gleiche Teile sind mit gleichen Bezugsziffern versehen, so dass insofern auf die Beschreibung der Figuren 8 und 9 verwiesen wird.

Zu erkennen ist eine erste Welle 169 und eine zweite Welle 171. Die Wellen 169, 171 sind über die Vorrichtung 103" und das Kopplungselement 101" gekoppelt. Im Unterschied zur Darstellung gemäß Figur 9 ist die Zwischenwelle 115" zwei Taumelscheiben 145, die sich spiegelbildlich gegenüber liegen, zugeordnet. Die Vorrichtung 103" weist neben der ersten Masse 159 eine weitere, dazu spiegelbildlich aufgebaute rotierende Masse 173 auf.

Die gesamte Vorrichtung 103" ist hier durch spiegelbildlich zueinander aufgebaute Teile gekennzeichnet. Denkbar ist aber auch eine davon abweichende Auslegung, bei der sich hier spiegelbildlich gegenüberliegende Teile unterschiedlich dimensioniert und gestaltet sind. Da eine eingehende Beschreibung bereits zu Figur 9 erfolgte, soll hier nur auf die Funktionsweise eingegangen werden.

Die Darstellung gemäß Figur 10 zeigt die Anordnung mit versetzten Drehachsen 163, 137 der Wellen 169, 171. Ein Drehmoment und/oder eine Drehbewegung wird von der ersten Welle 169 über die erste Masse 159, die Kalottenlager 155, die Schwingungsdämpfungselemente 151, die Kalottenlager 149 auf die Taumelscheibe 145 und somit auf die Zwischenwelle 115" übertragen. Von dort wird das Drehmoment und/oder die Drehbewegung in umgekehrter Reihenfolge auf die Welle 171 weiter übertragen. Während einer 360°-Drehung der Wellen 169, 171 führen die Taumelscheiben 145 relativ zu den Massen 159, 173 eine vollständige Taumelbewegung innerhalb eines Taumelbereichs, der dem Winkel zwischen der ersten Achse 163 und der Zwischenachse 133 der Zwischenwelle 115" entspricht, durch. Dabei nehmen die Schwingungsdämpfungselemente 151 entsprechend ihrer Verlängerung und Verkürzung Energie auf und geben diese zumindest teilweise wieder ab. Wenn zusätzlich zur Drehbewegung ein Drehmoment übertragen wird, erfolgt noch eine Auslenkung der Schwingungsdämpfungselemente 151 gegenüber einer gedachten Durchmesserlinie. In diesem Fall werden die Schwingungsdämpfungselemente 151 zusätzlich verlängert, wodurch diese Energie aufnehmen beziehungsweise in einem gewünschten Maß in Reibungsenergie umwandeln. Es wird also das Prinzip eines Torsionsdämpfungssystems realisiert. Es ist zu erkennen, dass das Kopplungselement 101" Teil dieses Schwingungsdämpfungssystems ist. Somit ergibt sich eine besonders kompakte Bauweise der Anordnung. Je nach Auslegung der Schwingungsdämpfungselemente wird mehr oder weniger Energie in Reibung umgewandelt. So ist es möglich, die Vorrichtung 103" hinsichtlich Wirkungsgrad, kompakter Bauweise und Dämpfung von Torsionsschwingungen zu optimieren. Auch bei dieser Anordnung ist das Kopplungselement 101" zwischen den rotierenden Massen 159 und 173 angeordnet, wodurch sich ein geringer Raumbedarf für die Vorrichtung 103" ergibt.

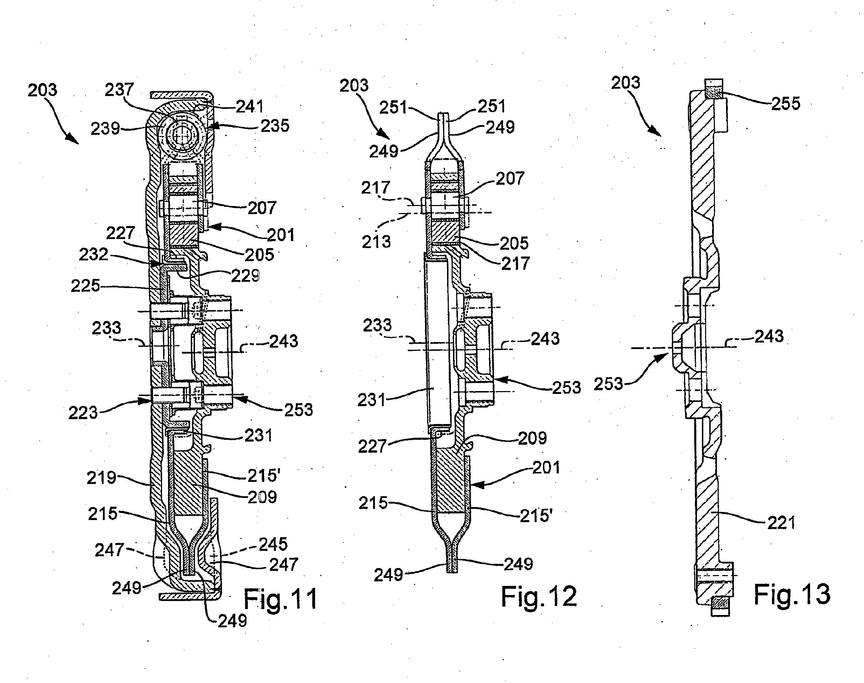

Die Figuren 11 bis 13 zeigen ein Kopplungselement 201, insbesondere für eine Vorrichtung 203 zur Kopplung zweier Wellen, sowie verschiedene Teilzusammenbauten der Vorrichtung 203.

Das in den Figuren 11 und 12 gezeigte Kopplungselement 201 weist einen Exzenter 205 auf, der einem Exzenterbolzen 207 und einer Kupplungsplatte 209 zugeordnet ist.

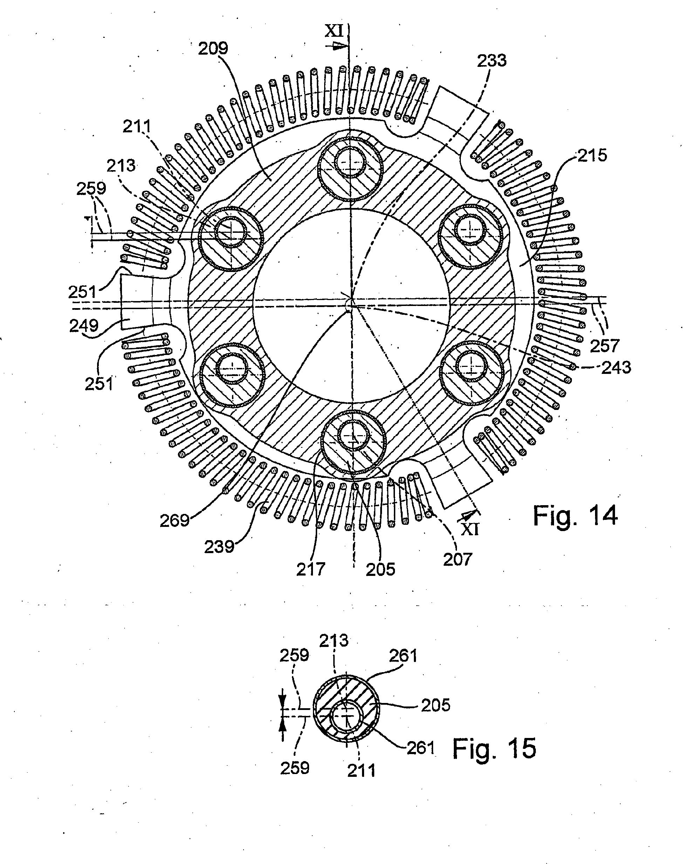

Das Kopplungselement 201 weist hier insgesamt sechs Exzenter 205 mit den dazugehörigen Exzenterbolzen 207 auf, von denen wegen dem Schnittverlauf entlang der in Figur 15 eingezeichneten Linie XI-XI jeweils nur einer sichtbar ist. Es ist möglich, mehr oder weniger Exzenter 205 an der Kupplungsplatte 209 vorzusehen.

Der Exzenter 205 ist um eine Exzenterachse 211 und eine Bolzenachse 213, die jeweils strichpunktiert angedeutet sind, drehbar gelagert. Der Exzenterbolzen 207 ist zwei Scheiben 215, 215' zugeordnet. Der Exzenter 205 ist in eine Bohrung 217 der Kupplungsplatte 209 eingebracht, deren Bohrachse der Exzenterachse 213 entspricht. Der Exzenter 205 ist in der Bohrung 217 frei drehbar gelagert. Somit sind die Scheiben 215, 215' und die Kupplungsplatte 209 über den Exzenter 205 mit seinem Exzenterbolzen 207 gekoppelt. Bei feststehend gedachtem Exzenterbolzen 207, also feststehender Bolzenachse 211 und feststehenden Scheiben 215, 215', ist also die Kupplungsplatte 209 auf einer kreisförmigen Bahn mit einem Radius, der dem Abstand der Achsen 211, 213 entspricht, auf und ab bewegbar.

Das Kopplungselement 201 ist insbesondere einer ersten rotierenden Masse 219, die in Figur 11 dargestellt ist, und einer zweiten rotierenden Masse 221, die in Figur 13 dargestellt ist, zugeordnet. Die Zuordnung erfolgt mittels geeigneter Fixierungsmittel, insbesondere mittels eines Flansches. Möglich ist es auch, anstelle der durch einen Flansch hergestellten festen Verbindung der rotierenden Massen 219, 221 für zumindest eine der Massen 219, 221 eine Anbindung zu wählen, die eine relative Verdrehung zulässt.

In Figur 11 ist eine solche Anbindung der ersten Masse 219 an die Scheiben 215, 215' dargestellt. Hierzu ist die erste rotierende Masse 219 über einen Flansch 223 an einen Lagerteller 225 angeschraubt. Ein Lagerbereich 227 der Scheibe 215, eine Lagerschale 231 und ein Lagerbereich 229 des Lagertellers 225 bilden ein Reiblager 232 für die über die Exzenterbolzen fest miteinander verbundenen Scheiben 215, 215' um eine erste Drehachse 233, die strichpunktiert angedeutet ist. Die erste rotierende Masse 219 ist ebenfalls mittels eines hier nicht dargestellten Lagers um die erste Achse 233 drehbar gelagert. Somit sind über das hier nicht dargestellte Lager und das Reiblager die erste rotierende Masse 219 und die Scheiben 215, 215' um die erste Achse 233 drehbar gelagert, wobei die Scheiben 215, 215' relativ gegen die erste rotierende Masse 219 verdrehbar sind. Die Kopplung der zwei Scheiben 215, 215' und der ersten Massen 219 erfolgt über ein Schwingungsdämpfungselement 235, das hier eine innere Bogenfeder 237, eine äußere Bogenfeder 239, eine Reiblagerung 241 für die äußere Bogenfeder 239 und das weiter oben beschriebene Reiblager 232 umfasst.

Da die zweite rotierende Masse 221 über die Kupplungsplatte 209 und den Exzenter 205 mit den zwei Scheiben 215, 215' gekoppelt ist, können letztlich die zwei rotierenden Massen 219, 221 relativ gegeneinander verdreht werden. Dabei nimmt das Schwingungsdämpfungselement 235, entsprechend dem Verdrehwinkel, Energie auf beziehungsweise gibt diese wieder ab beziehungsweise wandelt einen Teil davon in Reibungsenergie um. Somit wird durch die in den Figuren 11 bis 13 gezeigte Vorrichtung 203 das Prinzip eines Torsionsschwingungsdämpfungssystems realisiert. Die rotierenden Massen 219, 221 sowie das Schwingungsdämpfungselement 235 sind auf den jeweiligen Anwendungsfall, also auf die zu erwartenden Torsionsschwingungen auszulegen. Dabei spielt es keine Rolle, welche Art von Lagern 232, 241 verwendet werden. Möglich sind an dieser Stelle auch Kugellager, Rollenlager, Gleitlager oder andere bekannte Lagerungen.

Den Figuren 11 bis 13 ist auch zu entnehmen, dass eine Drehbewegung der ersten Masse 219 um die erste Achse 233 über den Exzenter 205 und die Kupplungsplatte 209 so übertragen wird, dass die zweite rotierende Masse 221 entlang einer zweiten Achse 243, die hier strichpunktiert dargestellt ist, rotiert. Hierzu sind für die zweite rotierende Masse 221 entsprechende Lager, die hier nicht dargestellt sind, vorgesehen.

Die Übertragung eines Drehmoments von dem Schwingungsdämpfungselement 35 von und auf die erste rotierende Masse 219 erfolgt über hier nicht sichtbare Anschläge 245, die durch Eindellungen 247 der ansonsten tellerförmig gestalteten rotierenden ersten Masse 219 gebildet werden. In der Darstellung gemäß Figur 11 liegen die Anschläge 245 etwas vor und etwas hinter der Bildebene. Außerdem erfolgt aufgrund der Reibung über die Lager 232, 241 eine gewisse Drehmomentübertragung.

Für die Übertragung eines Drehmoments zwischen dem Schwingungsdämpfungselement 235 und den zwei Scheiben 215, 215' weisen diese Stege 249 auf, die Federanschläge 251 bilden.

Die rotierende Masse 221 und die Kupplungsplatte 209 weisen einen Flansch 253 auf, über den diese verschraubbar sind.

Außerdem weist die in Figur 13 dargestellte zweite Masse 221 einen Zahnkranz 255 auf, über den diese, beispielsweise durch einen Elektromotor beziehungsweise einen Anlasser für Verbrennungsmotoren, antreibbar ist. Ferner kann eine Verliersicherung, insbesondere eine zentrische Bohrung zum Einbringen einer Schraube, vorgesehen sein.

Figur 14 zeigt einen schematisierten Querschnitt des in den Figuren 11 und 12 dargestellten Kopplungselements 201. Gleiche Teile sind mit gleichen Bezugsziffern versehen, so dass insofern auf die Beschreibung der Figuren 11 und 12 verwiesen wird.

Zu erkennen ist die Kupplungsplatte 209, die insgesamt sechs Bohrungen 217 aufweist, in die die Exzenter 205 eingebracht sind.

Durch zwei gestrichelte Linien 257 ist der axiale Versatz der Achsen 233 und 243 angedeutet, der dem Versatz der Bolzenachse 211 und der Exzenterachse 213 entspricht, der ebenfalls durch zwei Linien 259 angedeutet ist. Es ist zu erkennen, dass die Bolzenachsen 211 der Exzenterbolzen 207, die den Scheiben 215, 215' und damit der ersten Masse 219 zugeordnet sind, radial zur ersten Achse 233 gleich beabstandet sind. Analog dazu sind die Exzenterachsen 213 der Exzenter 205, die der Kupplungsplatte 209 und damit der zweiten Masse 221 zugeordnet sind, zur zweiten Achse 243 radial gleich beabstandet.

Bei feststehend gedachten Achsen 233, 243 wirken also die Exzenter 205 und ihre Exzenterbolzen 207 wie Pleuelstangen, die die Kupplungsplatte 209 mit den Scheiben 215, 215' koppeln. Somit ist es möglich, von den Scheiben 215, 215' auf die Kupplungsplatte 209, oder umgekehrt, ein Drehmoment zu übertragen, ohne dabei die Lagerungen derselben durch Radialkräfte zu beanspruchen. Dieses Prinzip ist auch als "Schmidt-Kupplung" bekannt, so dass an dieser Stelle nicht weiter darauf eingegangen wird.

Figur 15 zeigt einen Exzenter 205 des Kopplungselements 201. Gleiche Teile sind mit gleichen Bezugsziffern versehen, so dass insofern auf die Beschreibung der vorangehenden Figuren verwiesen wird.

Zu erkennen ist, dass der Exzenter 205 und der Exzenterbolzen 207 durch Lagerbereiche 261 umgeben sind. Die Lagerbereiche 261 können unter tribologischen Gesichtspunkten so ausgelegt werden, dass ein minimaler Verschleiß und eine minimale Reibung auftritt, um eine möglichst große Lebensdauer und einen guten Wirkungsgrad des Kopplungselements 201 zu erzielen. Vorteilhaft ist auch, dass die Exzenter 205 über dem Schwingungsdämpfungselement 235 mit der Kurbelwelle 263 gekoppelt ist, was ebenfalls die Reibung und den Verschleiß minimiert.

In dem hier vorliegenden Fall sind die Lagerbereiche 261 als Reiblager ausgebildet. Denkbar sind aber auch andere vorteilhafte Lagerprinzipien, beispielsweise Kugellager, Wälzlager oder ähnliche.

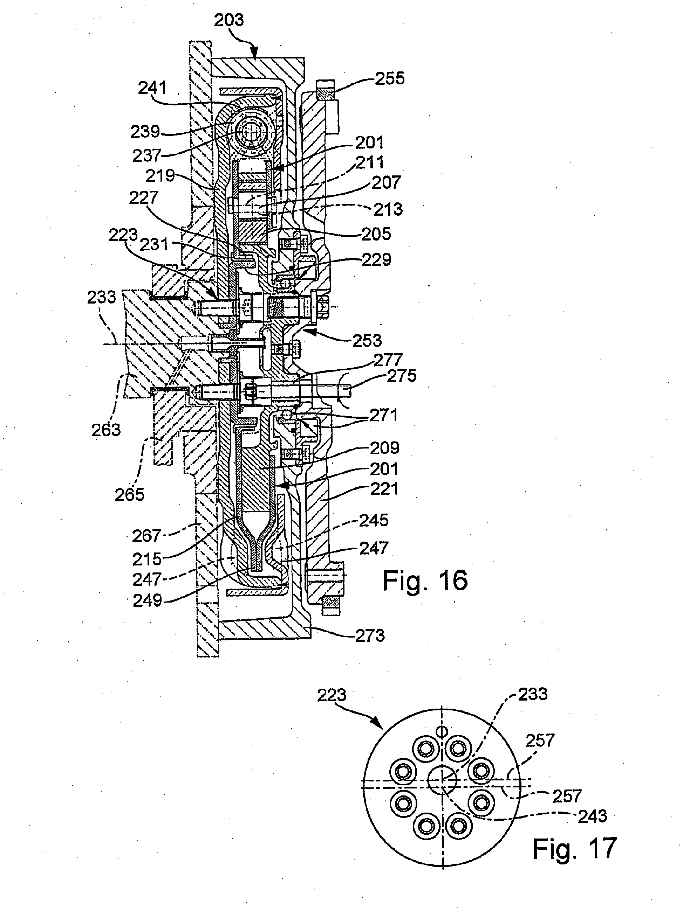

Figur 16 zeigt die in den Figuren 11 bis 13 gezeigte Vorrichtung 203 im montierten Zustand. Gleiche Teile sind mit gleichen Bezugsziffern versehen, so dass insofern auf die Beschreibung der vorhergehenden Figuren verwiesen wird.

In der Darstellung gemäß Figur 16 sind die Scheiben 215, 215' über den Flansch 223 einer Kurbelwelle 263 eines Verbrennungsmotors zugeordnet. Die Drehachse der Kurbelwelle 263 entspricht folglich der ersten Achse 233. Mittels einem Exzenterstück 265 ist die Kurbelwelle 263 exzentrisch gegenüber einem Motorblock 267 des Verbrennungsmotors gelagert. Diese Exzenterbewegung, die auch die erste Achse 233 verlagert, kann zur Veränderung der Kompression des Verbrennungsmotors ausgenutzt werden. In Figur 14 ist durch einen Halbkreis 269 die durch das Exzenterstück 265 bewirkte Bahnkurve der ersten Achse 233 der Kurbelwelle 263 angedeutet.

Die durch das in Figur 16 dargestellte Exzenterstück 265 bewirkte Exzentrizität der ersten Achse 233 der Kurbelwelle 263 entspricht exakt dem Versatz der Achsen 233 und 243. Da die inneren Scheiben 215, 215' und die erste Masse 219 an die Kurbelwelle angeflanscht sind, werden diese bei einer Verstellung der Kurbelwelle mit verstellt.

Die zweite Masse 221 ist durch den Flansch 253 fest mit der Kupplungsplatte 209 verbunden und mittels geeigneten Lagern 271 gemeinsam mit dieser drehbar gegenüber einem Gehäuse 273 der Vorrichtung 203 gelagert. Das Gehäuse 273 wiederum ist fest mit dem Motorblock 267 verbunden. Da die Exzentrizität der Kurbelwelle 263, die durch das Exzenterstück 265 hervorgerufen wird, exakt dem axialen Versatz der Achsen 233 und 243 entspricht, wird durch eine Verstellung der Kurbelwelle 263 deren Achse 233 in konstantem Abstand um die zweite Achse 243 der zweiten Masse 221 herumgeführt. Dieser axiale Versatz jedoch wird durch die Anordnung der Scheiben 215, 215', der Exzenter 205 und der Kupplungsplatte 209 ausgeglichen. Es ist also möglich, trotz einer Verstellung der Kurbelwellenachse 233 der zweiten Masse 221 eine feststehende Welle, beispielsweise eine Abtriebswelle, insbesondere eine Getriebeeingangswelle zuzuordnen.

Zu erkennen ist auch, dass das Kopplungselement 201 in die Vorrichtung 203, die den axialen Versatz zwischen der Kurbelwelle 263 und der Abtriebswelle ausgleicht, vollständig integriert ist. Somit ist der Bauraum der Vorrichtung 203 besonders klein. Da die Übertragung des Drehmoments über den axialen Versatz hinweg keine radialen Lagerkräfte verursacht, sind die Lagerverluste besonders gering. Somit stellt die Vorrichtung 203 einen optimalen Kompromiß der Größen Wirkungsgrad, Kompaktbauweise und Dämpfung von Torsionsschwingungen dar.

Figur 17 zeigt den Lochkreis des Flansches 253 der in Figur 16 dargestellten Vorrichtung 203. Gleiche Teile sind mit gleichen Bezugsziffern versehen, so dass insofern auf die Beschreibung der vorhergehenden Figuren verwiesen wird.

Es ist zu erkennen, dass der Lochkreis des Flansches 253 gegenüber seiner Drehachse, also der ersten Achse 233 beziehungsweise der Kurbelwellenachse 233 versetzt angeordnet ist. Der Versatz ist durch die zwei Linien 257 angedeutet und entspricht exakt dem axialen Versatz der Achsen 233, 243. Der Lochkreis des Flansches ist also exzentrisch zur ersten Achse 233 und zentrisch zur zweiten Achse 243 angeordnet. Dies ist bei der Montage der Vorrichtung 203 vorteilhaft, auf die im Folgenden mit Bezug auf Figur 16 kurz eingegangen wird:

In einem ersten Schritt wird mittels einer Montagehilfe 275, die hierzu in eine Bohrung 277 des Flansches 253 einbringbar ist, die Schraubverbindung des Flansches 253 der Kurbelwelle 263 und der ersten Masse 219 hergestellt. Der Flansch 253 weist ebenfalls einen Lochkreis auf, der denselben Durchmesser des Lochkreises des Flansches 223 aufweist und zentrisch zur Achse 243 der zweiten Masse 221 angeordnet ist. Die Lochkreise der Flansche 223 und 253 können also exakt zur Deckung gebracht werden, so dass die Montagehilfe 275 in die Bohrung 277 des Flansches 253 zum Festziehen des Flansches 223 einführbar ist.

Sobald die Schrauben des Flansches 223 festgezogen sind, können in einem zweiten Schritt die Schrauben des Flansches 253 angezogen werden.

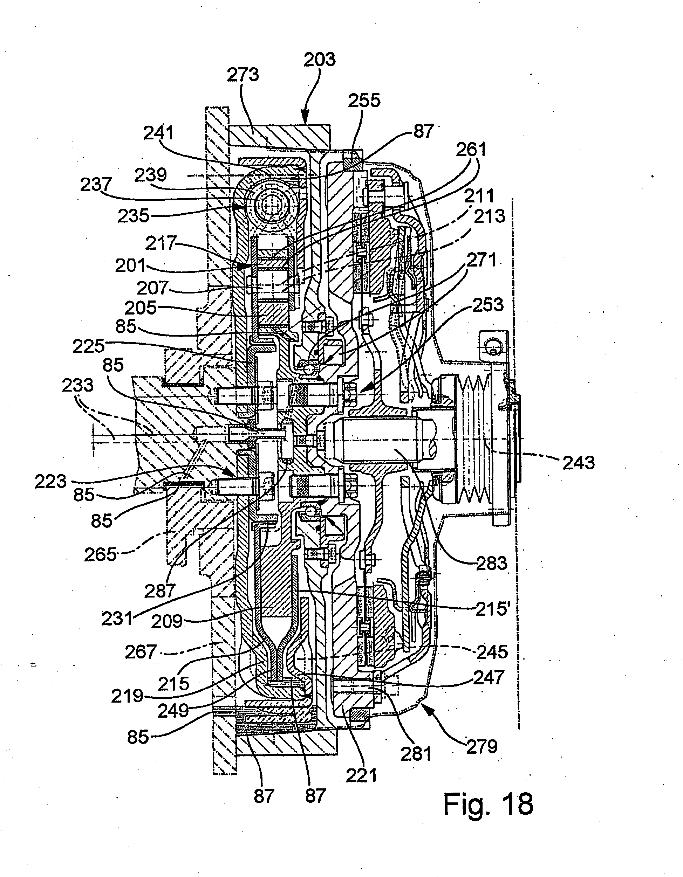

Figur 18 zeigt die Vorrichtung 203 mit dem Kopplungselement 201 in Kombination mit dem durch den teilweise dargestellten Motorblock 267 angedeuteten Verbrennungsmotor und einer Trockenkupplung 279. Gleiche Teile sind mit gleichen Bezugsziffern versehen, so dass insofern auf die Beschreibung der vorhergehenden Figuren verwiesen wird.

Der Trockenkupplung 279 ist mittels geeigneter Verbindungsmittel 281 die zweite rotierende Masse 221, bei der es sich insbesondere um eine Gussplatte handelt, zugeordnet. Über die Kupplung 279 kann je nach Betätigungsstellung derselben eine starre Verbindung zu einer Abtriebswelle 283, insbesondere einer Getriebeeingangswelle, hergestellt werden. Die Drehachse der Abtriebswelle 283 entspricht der zweiten Achse 243, also der Drehachse der zweiten rotierenden Masse 221. Somit werden die verstellbare Kurbelwelle 263 und die Abtriebswelle 283 über die Vorrichtung 203 mit dem Kopplungselement 201 trotz des axialen Versatzes der Achsen 233, 243 so gekoppelt, dass auf kleinstem Bauraum, unter Dämpfung von Torsionsschwingungen bei gutem Wirkungsgrad ein Drehmoment beziehungsweise eine Drehbewegung übertragen werden kann.

Die Vorrichtung 203 weist eine Ölschmierung auf. Hierzu sind in den verschiedenen Bauteilen Ölkanäle 285 vorgesehen, die teilweise gestrichelt eingezeichnet sind. Außerdem sind zur Ölführung diverse Ölseen 287 vorgesehen, die durch waagerechte Striche angedeutet sind. Die Ölseen 287 bilden sich aufgrund der auf das Öl wirkenden Zentrifugalkräfte, das durch die sich drehenden Teile der Vorrichtung 203 mitgerissen wird.

## Patentansprüche

1. Vorrichtung zur Kopplung zweier einander mit Abstand achsparallel oder in einem Winkel zueinander angeordneten Wellen mit mindestens einem Kopplungselement (3), wobei mindestens eine erste rotierende Masse (43) und eine zweite rotierende Masse (55) vorgesehen sind, die zur Dämpfung von Torsionsschwingungen über wenigstens einen Schwingungsdämpfer (29) drehgekoppelt sind, wobei eine der ersten rotierenden Masse (43) zugeordnete Kurbelwelle (41) und eine der zweiten rotierenden Masse (55) zugeordnete Abtriebswelle (59) einen Achsversatz aufweisen, wobei der Schwingungsdämpfer (29) als Druckfedern ausgebildete, elastische Elemente (31) aufweist, die zwischen mit den zueinander verdrehbaren Massen (43, 55) drehverbundenen Anschlägen einspannbar sind, wobei Elemente, die einen Ausgleich des Achsversatzes ermöglichen, mit den elastischen Elementen (31) in Reihe wirksam sind.

2. Vorrichtung nach Anspruch 1, **dadurch gekennzeichnet, dass** die Elemente zum Ausgleich des Achsversatzes mindestens ein elastisches Element (27) umfassen.

3. Vorrichtung nach Anspruch 2, **dadurch gekennzeichnet, dass** das mindestens eine elastische Element (27) als Druckfeder ausgebildet ist.

4. Vorrichtung nach einem der Ansprüche 2 oder 3, **dadurch gekennzeichnet, dass** das mindestens eine elastische Element (27) vorgespannt ist.

5. Vorrichtung nach einem der Ansprüche 2 bis 4, **gekennzeichnet durch** vier parallel zueinander angeordnete, über das mindestens eine elastische Element gekoppelte Scheiben (5, 21), wobei je zwei fest miteinander verbunden sind.

6. Vorrichtung nach Anspruch 5, **dadurch gekennzeichnet, dass** die Scheiben (5, 21) jeweils mindestens einen Durchbruch (7) aufweisen, der bevorzugt länglich ausgebildet ist und in Umfangsrichtung der Scheiben gekrümmt verläuft.

7. Vorrichtung nach Anspruch 6, **dadurch gekennzeichnet, dass** dem mindestens einen Durchbruch (7) zwei elastische Elemente (27) zugeordnet sind.

8. Vorrichtung nach einem der Ansprüche 2 bis 7, **dadurch gekennzeichnet, dass** zwei innere Scheiben (5) und zwei äußere Scheiben (21), die jeweils einander zugeordnet sind, vorgesehen sind.

9. Vorrichtung nach Anspruch 8, **dadurch gekennzeichnet, dass** die jeweils miteinander verbundenen Scheiben (5, 21) im Wesentlichen symmetrisch zu einer gedachten Mittelachse aufgebaut und angeordnet sind.

10. Vorrichtung nach einem der Ansprüche 8 oder 9, **dadurch gekennzeichnet, dass** der mindestens eine Durchbruch (7) der zwei inneren Scheiben (5) verdreht gegen den mindestens einen Durchbruch (7) der zwei äußeren Scheiben (21) angeordnet ist.

11. Vorrichtung nach einem der Ansprüche 8 bis 10, **dadurch gekennzeichnet, dass** das mindestens eine elastische Element (27) mit einem durch die inneren Scheiben (5) gebildeten Lager, insbesondere einem Federkanal und einem Federanschlag, und einem durch die äußeren Scheiben (21) gebildeten Lager, insbesondere einem Federkanal und einem Federanschlag, zusammenwirkt.

12. Vorrichtung nach einem der Ansprüche 8 bis 11, **dadurch gekennzeichnet, dass** die inneren Scheiben (5) und die äußeren Scheiben (21) elastisch so gekoppelt sind, dass diese gegeneinander axial versetzbar sind, und dass im versetzten, achsparal-lelen oder koaxialen Zustand von den inneren Scheiben (5) auf die äußeren Scheiben (21) - oder umgekehrt - ein Drehmoment übertragbar ist.

13. Vorrichtung, insbesondere nach einem der Ansprüche 8 bis 12, **dadurch gekennzeichnet, dass** die inneren Scheiben (5) und die äußeren Scheiben (21) jeweils einen Bereich (17), insbesondere einen Steg und/oder einen Flansch zur Übertragung eines Drehmoments auf ein anderes Bauteil aufweisen.

14. Vorrichtung nach Anspruch 1, **dadurch gekennzeichnet, dass** die Elemente zum Ausgleich des Achsversatzes mindestens einen einstellbaren Exzenter (205) umfassen.

## Claims

1. Device for coupling two shafts, arranged at a mutual distance axially parallel or at an angle to one another, by means of at least one coupling element (3), at least one first rotating mass (43) and one second rotating mass (55) being provided, which are rotationally coupled via at least one vibration damper (29) for the damping of torsional vibrations, a camshaft (41) which is assigned to the first rotating mass (43) and an output shaft (59) which is assigned to the second rotating mass (55) having an axial offset, the vibration damper (29) having elastic elements (31) which are designed as compression springs and which can be tension-mounted between stops rotationally connected to the mutually rotatable masses (43, 55), elements which allow compensation of the axial offset being active in series with the elastic elements (31).

2. Device according to Claim 1, **characterized in that** the elements for compensating the axial offset comprise at least one elastic element (27).

3. Device according to Claim 2, **characterized in that** the at least one elastic element (27) is designed as a compression spring.

4. Device according to either one of Claims 2 and 3, **characterized in that** the at least one elastic element (27) is prestressed.

5. Device according to one of Claims 2 to 4, **characterized by** four discs (5, 21) arranged parallel to one another and coupled via the at least one elastic element, two discs in each case being fixedly connected to one another.

6. Device according to Claim 5, **characterized in that** the discs (5, 21) have in each case at least one perforation (7) which is preferably of elongate form and has a curved profile in the circumferential direction of the discs.

7. Device according to Claim 6, **characterized in that** the at least one perforation (7) is assigned two elastic elements (27).

8. Device according to one of Claims 2 to 7, **characterized in that** two inner discs (5) and two outer discs (21), which are assigned in each case to one another, are provided.

9. Device according to Claim 8, **characterized in that** the discs (5, 21) connected in each case to one another are constructed and arranged essentially symmetrically to an imaginary mid-axis.

10. Device according to either one of Claims 8 and 9, **characterized in that** the at least one perforation (7) of the two inner discs (5) is arranged so as to be rotated with respect to the at least one perforation (7) of the two outer discs (21).

11. Device according to one of Claims 8 to 10, **characterized in that** the at least one elastic element (27) cooperates with a bearing, in particular a spring channel and a spring stop, formed by the inner discs (5) and with a bearing, in particular a spring channel and a spring stop, formed by the outer discs (21).

12. Device according to one of Claims 8 to 11, **characterized in that** the inner discs (5) and the outer discs (21) are coupled elastically such that they can be offset axially with respect to one another, and **in that**, in the offset, axially parallel or coaxial state, a torque can be transmitted from the inner discs (5) to the outer discs (21), or vice versa.

13. Device, particularly according to one of Claims 8 to 12, **characterized in that** the inner discs (5) and the outer discs (21) have in each case a region (17), in particular a web and/or a flange, for transmitting a torque to another component.

14. Device according to Claim 1, **characterized in that** the elements for compensating the axial offset comprise at least one adjustable eccentric (205).

## Revendications

1. Dispositif pour accoupler deux arbres disposés à distance l'un de l'autre avec leurs axes parallèles ou inclinés l'un par rapport à l'autre, comprenant au moins un élément d'accouplement (3), au moins une première masse rotative (43) et une deuxième masse rotative (55) étant prévues, lesquelles sont accouplées en rotation pour l'amortissement d'oscillations de torsion par le biais d'au moins un amortisseur d'oscillations (29), un vilebrequin (41) associé à la première masse rotative (43) et un arbre de prise de force (59) associé à la deuxième masse rotative (55) présentant un décalage axial, l'amortisseur d'oscillations (29) présentant des éléments élastiques (31) réalisés sous forme de ressorts de compression, lesquels peuvent être serrés entre des butées connectées de manière rotative aux masses (43, 55) pouvant tourner l'une par rapport à l'autre, des éléments qui permettent une compensation du décalage axial agissant en série avec les éléments élastiques (31).

2. Dispositif selon la revendication 1, **caractérisé en ce que** les éléments de compensation du décalage axial comprennent au moins un élément élastique (27).

3. Dispositif selon la revendication 2, **caractérisé en ce que** l'au moins un élément élastique (27) est réalisé sous forme de ressort de compression.

4. Dispositif selon l'une quelconque des revendications 2 ou 3, **caractérisé en ce que** l'au moins un élément élastique (27) est précontraint.

5. Dispositif selon l'une quelconque des revendications 2 à 4, **caractérisé par** quatre disques (5, 21) disposés parallèlement les uns aux autres, accouplés par le biais de l'au moins un élément élastique, deux d'entre eux étant à chaque fois connectés fixement l'un à l'autre.

6. Dispositif selon la revendication 5, **caractérisé en ce que** les disques (5, 21) présentent à chaque fois au moins un orifice (7) qui est réalisé de préférence sous forme oblongue et qui s'étend sous forme courbe dans la direction périphérique des disques.

7. Dispositif selon la revendication 6, **caractérisé en ce que** deux éléments élastiques (27) sont associés à l'au moins un orifice (7).

8. Dispositif selon l'une quelconque des revendications 2 à 7, **caractérisé en ce que** deux disques internes (5) et deux disques externes (21), lesquels sont respectivement associés l'un à l'autre, sont prévus.

9. Dispositif selon la revendication 8, **caractérisé en ce que** les disques (5, 21) connectés à chaque fois les uns aux autres sont réalisés et disposés de manière essentiellement symétrique par rapport à un axe médian théorique.

10. Dispositif selon l'une quelconque des revendications 8 ou 9, **caractérisé en ce que** l'au moins un orifice (7) des deux disques internes (5) est disposé de manière tournée par rapport à l'au moins un orifice (7) des deux disques externes (21).

11. Dispositif selon l'une quelconque des revendications 8 à 10, **caractérisé en ce que** l'au moins un élément élastique (27) coopère avec un palier formé par les disques internes (5), en particulier avec un canal de ressort et une butée de ressort, et avec un palier formé par les disques externes (21), en particulier un canal de ressort et une butée de ressort.

12. Dispositif selon l'une quelconque des revendications 8 à 11, **caractérisé en ce que** les disques internes (5) et les disques externes (21) sont accouplés élastiquement de telle sorte qu'ils puissent être décalés axialement les uns par rapport aux autres et qu'un couple puisse être transmis des disques internes (5) aux disques externes (21)- ou inversement - dans l'état décalé, avec les axes parallèles ou coaxiaux.

13. Dispositif, en particulier selon l'une quelconque des revendications 8 à 12, **caractérisé en ce que** les disques internes (5) et les disques externes (21) présentent à chaque fois une région (17), en particulier une nervure et/ou une bride pour le transfert d'un couple à un autre composant.

14. Dispositif selon la revendication 1, **caractérisé en ce que** les éléments de compensation du décalage axial comprennent au moins un excentrique ajustable (205).
